# EUROPÄISCHE PATENTSCHRIFT

(11) **EP 2 732 080 B1**
(45) Veröffentlichungstag und Bekanntmachung des Hinweises auf die Patenterteilung: **17.06.2015**
(21) Anmeldenummer: 12730929.2
(22) Anmeldetag: 26.06.2012
(51) Int. Cl.: D01F 2/06, D01F 2/00

(54) **REGENERIERTE CELLULOSEFASER**
REGENERATED CELLULOSE FIBER
FIBRE CELLULOSIQUE RÉGÉNÉRÉE

(30) Priorität: 15.07.2011 EP 11174142
(43) Veröffentlichungstag der Anmeldung: 21.05.2014
(73) Patentinhaber: Kelheim Fibres GmbH, 93309 Kelheim (DE)
(72) Erfinder: BERNT, Ingo, 93053 Regensburg (DE); BRUNNER, Konrad, 93309 Kelheim (DE); NORTH, Matthew, 93077 Bad Abbach (DE); RÖTHENBACHER, Reinhold, 93080 Pentling (DE); ROGGENSTEIN, Walter, 93077 Bad Abbach (DE); SCHOLZ, Roland, 93047 Regensburg (DE)
(74) Vertreter: Nemec, Harald
(86) Internationale Anmeldenummer: PCT/EP2012/062374
(87) Internationale Veröffentlichungsnummer: WO 2013/010759

(56) Entgegenhaltungen:
- US-A- 5 634 914

## Beschreibung

Die vorliegende Erfindung betrifft eine regenerierte Cellulosefaser, die durch das Viskoseverfahren erhalten wird.

Für Hygieneanwendungen wie zum Beispiel Tampons oder Saugkörper im Allgemeinen sind Fasern mit besonders hohem Flüssigkeitsspeichervermögen wünschenswert, um so eine möglichst hohe Absorptionskapazität des Hygieneprodukts zu ermöglichen.

Fasermaterialien nach dem Stand der Technik, die üblicherweise zur Herstellung von Tampons verwendet werden, sind gewöhnliche Viskosefasern, sogenannte trilobale Viskosefasern und Baumwolle. Das spezifische Absorptionsvermögen dieser Fasern beträgt nach dem weiter unten beschriebenen sogenannten Syngina-Test ungefähr 4,0 g/g für Baumwolle, 4,5 g/g für gewöhnliche Viskose und 5,2 g/g für trilobale Viskosefasern.

Das Ziel der Tamponhersteller besteht darin, mit einem minimalen Aufwand an Fasermaterial und Kosten einen bestimmten Absorptionsgrad zu erzielen.

Während Baumwolle wegen ihres ungenügenden Absorptionsvermögens als Fasermaterial für Tampons langsam ausgedient hat, sind trilobale Fasern im Vergleich zur gewöhnlichen Viskose viel teurer in der Herstellung und viel schwieriger zu Tampons zu verarbeiten.

Über viele verschiedene Ansätze zur Steigerung des Absorptionsvermögens von Cellulosefasern wurde berichtet:
1. eine chemische Veränderung durch das Aufpfropfen von Monomeren auf die Cellulosefaser
2. eine chemische Veränderung durch den Einbau von absorbierenden Polymeren wie Carboxymethylcellulose, Chitosan, Cellulosecarbamat, Alginat oder Guaran in die Cellulosefasermatrix
3. eine physikalische Veränderung der Fasern, wie z.B. Hohlfasern oder zusammengefallene Hohlfasern, wie beispielsweise aus der US-A 4,129,679 bekannt, oder
4. mehrschenkelige Fasern (sogenannte "trilobale" Fasern), die durch die Verwendung von Spinndüsen mit mehrschenkeligen Extrusionslöchern mit zumindest 3 Schenkeln mit einem Länge-Breite-Verhältnis von 2:1 zu 10:1 erhalten werden, wie beispielsweise aus der EP-A1 0 301 874 bekannt.

Der Nachteil einer chemischen Veränderung der Cellulosefaser besteht darin, dass für sehr empfindliche medizinische Anwendungen wie jener von Tampons ein kostspieliges und zeitaufwendiges toxikologisches und physiologisches Testverfahren nötig ist und das Auftreten des toxischen Schocksyndroms (TSS) die meisten Tamponhersteller von der Verwendung chemisch modifizierter Fasermaterialien abhält, obwohl die Chemikalien als sicher gelten mögen.

Der Nachteil von Hohlfasern und zusammengefallenen Hohlfasern besteht darin, dass sie wegen ihres hohen Wasserrückhaltevermögens schwierig herzustellen sind, aufgrund dessen die Fasern während des Waschens stark anschwellen und wegen der Bildung von Wasserstoffbrücken während des Trocknens aneinanderkleben, was sie im trockenen Zustand brüchig, im nassen Zustand seifig und es schwierig macht, sie aufzubrechen und in ein kardiertes Gewebe zu verarbeiten.

Die Verwendung von mehrschenkeligen, insbesondere trilobalen Fasern erfuhr während der letzten Jahre eine stetige Zunahme.

Die Herstellung mehrschenkeliger Viskosefasern wurde beispielsweise in den U.S.-Patenten 5,634,914 und 5,458,835 und in der EP-A1 0 301 874 beschrieben. Das dort geoffenbarte Verfahren beschreibt das Spinnen einer üblicherweise verwendeten Viskose, welche eine bestimmte Menge eines im Stand der Technik bekannten Modifikators enthalten kann, durch Extrusionslöcher von mehrschenkeliger Form, insbesondere trilobaler Form, in ein herkömmliches Spinnbad. Das wesentliche Merkmal dieses Verfahrens besteht darin, dass die Form der mehrschenkeligen Extrusionslöcher in der Spinndüse ähnlich der erwünschten Form des Querschnitts der Filamente ist. Gemäß den Lehren dieser Dokumente bestimmt die Geometrie des Spinndüsenlochs die Form des Faserquerschnitts, und durch ein entsprechendes Design der Extrusionslöcher kann ein bestimmtes Länge-Breite-Verhältnis des Faserquerschnitts erhalten werden.

Der Stand der Technik bezüglich mehrschenkeliger Fasern lehrt überdies, dass derartige mehrschenkelige Fasern im Vergleich zu Viskosefasern nach dem Stand der Technik ein gesteigertes Absorptionsvermögen besitzen, und zwar insbesondere in Tampons, und dass solche Fasern zumindest 3 Schenkel haben müssen und dass jeder Schenkel dieser Fasern ein Länge-Breite-Verhältnis von zumindest 2:1, am meisten bevorzugt von 3:1 bis 5:1, aufweisen muss. Je größer das Länge-Breite-Verhältnis ist, desto höher wären der Anteil an freiem Volumen und das Absorptionsvermögen der Fasern, vorausgesetzt, dass die Schenkel nicht so lang und dünn sind, dass sie sich auf sich selbst zurückbiegen.

In diesen Dokumenten ist auch erwähnt, dass unter den Bedingungen eines langsamen Regenerationsspinnens sogar noch höhere Absorptionsvermögen der mehrschenkeligen Fasern erzielt werden können, z.B. durch Absenken des Säurepegels und/oder Erhöhen des Sulfatpegels und/oder Zugabe eines Viskosemodifikators.

Die Tatsache, dass Hohlräume im Querschnitt von Viskosefasern das Absorptionsvermögen dieser Fasern und der daraus hergestellten Produkte erhöhen, ist weiters aus der US-A 4,362,159 bekannt.

Aus der WO 2004/085720 A ist eine massive regenerierte Standardviskosefaser bekannt, welche einen Querschnitt hat, dessen Fläche um einen Faktor von weniger als 2,50-fach, vorzugsweise weniger als 2,40-fach, besonders bevorzugt weniger als 2,25-fach, größer ist als die Fläche des größten gleichseitigen Dreiecks, das in diesen Querschnitt eingeschrieben ist, und welche ein nachfolgend definiertes Syngina-Absorptionsvermögen von mehr als 6,0 g/g Faser aufweist.

Die WO 2004/005595 A beschreibt eine saugfähige Standardviskosefaser mit einem unregelmäßigen gelappten Querschnitt. Weitere Viskosefasern mit unregelmäßigem Querschnitt sind in der US 4,129,679 und der GB-A 1,333,047 beschrieben.

Die US 6,403,217 B1 beschreibt verschiedenste Düsenkonfigurationen zur Herstellung von Fasern mit modifizierten Faserquerschnitten nach dem Schmelzspinnverfahren. Schmelzspinnverfahren unterscheiden sich grundlegend von dem im Viskoseprozess verwendeten Nass-Spinnverfahren.

Es ist weiters bekannt, dass eine Erhöhung des Fasertiters in der Regel zu einer Erhöhung der Saugfähigkeit der Faser führt, da die dickeren Fasern steifer sind und so die Poren im aus den Fasern aufgebauten saugfähigen Artikel weniger schnell kollabieren. Die Möglichkeit, insbesondere bei mehrschenkeligen Fasern die Absorptionsfähigkeit durch Erhöhung des Titers zu erhöhen, sind aber beschränkt.

Es besteht nach wie vor ein Bedürfnis an verbesserten saugfähigen Cellulosefasern. Insbesondere besteht ein Bedürfnis an mehrschenkeligen Cellulosefasern mit einem erhöhten Titer.

Die vorliegende Erfindung löst diese Aufgabe mit einer regenerierten Cellulosefaser mit einem mehrschenkeligen Querschnitt, welche dadurch gekennzeichnet, dass der Querschnitt aus zumindest zwei mehrschenkeligen Grundformen gebildet ist, welche Grundformen an jeweils zumindest einem ihrer Schenkelenden mit dem Schenkelende einer anderen Grundform verbunden sind und die Länge des durch die Verbindung der beiden Schenkelenden resultierenden Verbindungsschenkels um einen Faktor von zumindest 1,5, bevorzugt 1,5 bis 2,0 länger ist als die Länge des kürzesten der anderen Schenkel.

Die Aufgabe der Erfindung wird auch durch ein Faserbündel gelöst, welches eine Vielzahl von erfindungsgemäßen Cellulosefasern enthält.

Weitere Aspekte der vorliegenden Erfindung betreffen ein Verfahren zur Herstellung der erfindungsgemäßen Cellulosefaser sowie die Verwendung der erfindungsgemäßen Cellulosefaser sowie des erfindungsgemäßen Faserbündels.

### KURZE BESCHREIBUNG DER FIGUREN

Figur 1 zeigt schematisch die Anordnung zweier Fasern mit Y-förmigem Faserquerschnitt (Stand der Technik).
Figur 2 zeigt schematisch den Querschnitt einer Ausführungsform der erfindungsgemäßen Faser mit zwei miteinander am Ende eines ihrer Schenkel verbundenen mehrschenkeligen Grundformen.
Figur 3 zeigt schematisch den Querschnitt einer Ausführungsform der erfindungsgemäßen Faser mit drei miteinander am Ende eines ihrer Schenkel verbundenen mehrschenkeligen Grundformen
Figur 4 zeigt schematisch den Querschnitt einer Ausführungsform der erfindungsgemäßen Faser mit vier miteinander am Ende eines ihrer Schenkel verbundenen mehrschenkeligen Grundformen
Figur 5 zeigt schematisch die Ausbildung von Hohlräumen bei erfindungsgemäßen Fasern, die jeweils aus drei Grundformen aufgebaut sind.
Figur 6 zeigt schematisch die Ausbildung von Hohlräumen bei einer erfindungsgemäßen Faser, die aus 10 Grundformen aufgebaut ist.
Figur 7 zeigt schematisch der Querschnitt einer aus zwei asymmetrischen mehrschenkeligen Fasern aufgebauten erfindungsgemäßen Faser.
Figur 8 zeigt schematisch den Querschnitt einer zur Herstellung von erfindungsgemäßen Fasern verwendeten Öffnung einer Spinndüse
Figur 9 zeigt eine Mikrofotografie von Querschnitten erfindungsgemäßer Fasern.

### DETAILLIERTE BESCHREIBUNG DER ERFINDUNG

Die vorliegende Erfindung geht von der Problemstellung aus, dass bei mehrschenkeligen Cellulosefasern eine bloße Erhöhung des Fasertiters durch Verspinnen einer - bei gleichbleibender Querschnittsform - dickeren Faser keine verbesserten Eigenschaften hinsichtlich der Saugfähigkeit der Fasern bewirkt.

Die vorliegende Erfindung löst diese Aufgabe dadurch, dass anstelle einer Erhöhung des Titers durch proportionale Vergrößerung des Faserquerschnittes eine Vervielfachung des Faserquerschnittes erfolgt. Es werden also an sich bekannte mehrschenkelige Grundformen miteinander an ihren Schenkelenden verbunden, sodass eine größere Faser mit somit höherem Titer entsteht.Durch die Maßnahme, dass die Länge des durch die Verbindung der beiden Schenkelenden resultierenden Verbindungsschenkels um einen Faktor von zumindest 1,5, bevorzugt 1,5 bis 2,0 länger ist als die Länge des kürzesten der anderen Schenkel, wird der Abstand zwischen den Faserzentren deutlich erhöht, wodurch bei Anlagerung mehrerer Fasern aneinander große Hohlräume entstehen.

Die Grundformen sind bevorzugt aus der Gruppe bestehend aus Y-förmigen Grundformen, X-förmigen Grundformen und Mischungen daraus ausgewählt. Besonders bevorzugt sind Y-förmige, also "trilobale" Grundformen.

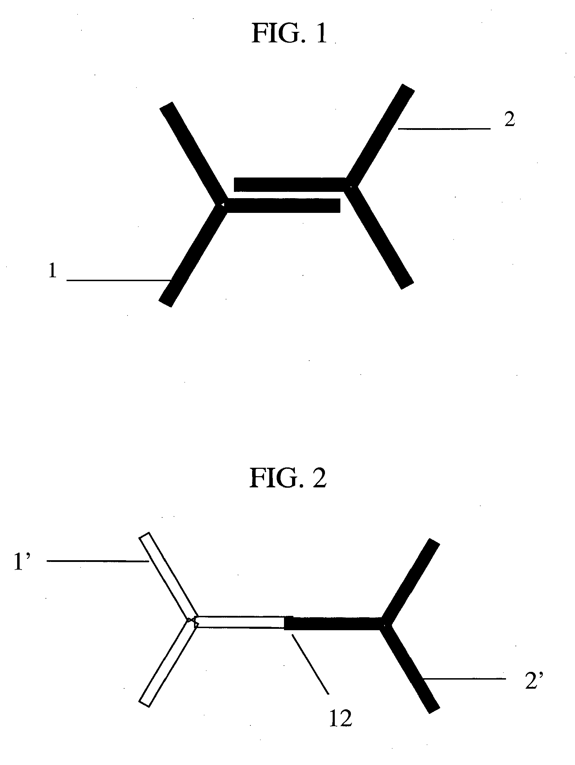

Figur 1 zeigt die Anordnung von zwei Fasern 1, 2 mit herkömmlicher trilobaler Querschnittsform. Durch die Schenkel der Faser werden die Faserzentren in einem großen Abstand gehalten, sodass Strukturen mit einem großen Flüssigkeitsspeichervermögen entstehen.

Figur 2 zeigt eine erfindungsgemäße Faser, die aus zwei miteinander an den Enden eines ihrer Schenkel verbundenen trilobalen Grundformen 1', 2' besteht (welche zur Veranschaulichung schwarz bzw. weiss dargestellt sind). Es ist unmittelbar ersichtlich, dass sich hier im Vergleich zur trilobalen Faser des Standes der Technik (Figur 1) der Abstand zwischen den zwei Y-förmigen Grundelementen deutlich vergrößert. Die Länge des durch die Verbindung der Schenkel entstandenen Verbindungsschenkels 12 ist, wie in Fig. 2 schematisch dargestellt ist, um einen Faktor von bevorzugt 1,5 bis 2,0 größer als die Länge der übrigen Schenkel.

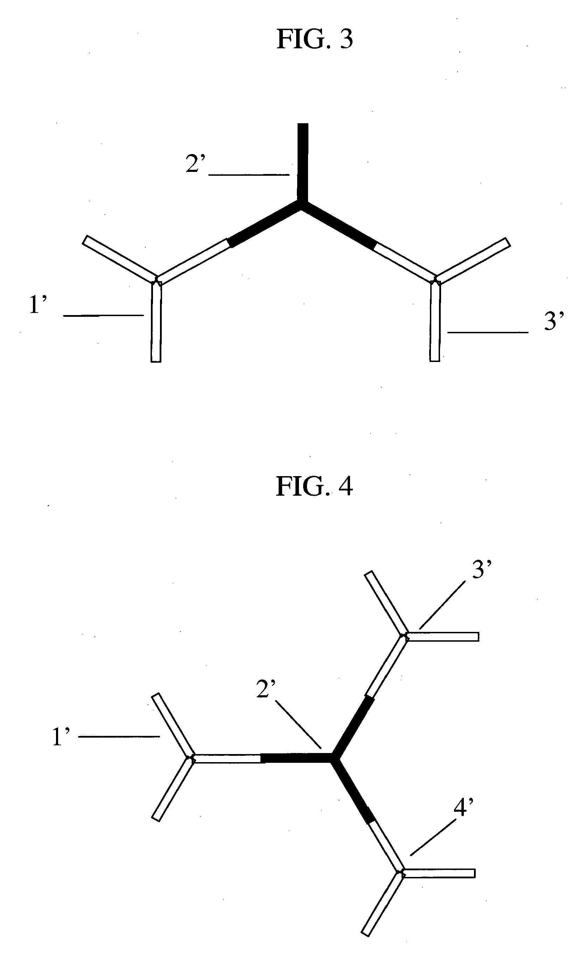

Dieser Effekt lässt sich, wie in den Figuren 3 und 4 gezeigt wird, durch Anordnung von mehr als zwei Grundformen, z.B. drei Grundformen 1', 2' 3' (Figur 3) bzw. vier Grundformen 1', 2', 3', 4' (Figur 4) noch erhöhen.

Je mehr Grundformen miteinander verbunden sind, umso höher ist (bei gleicher Größe der Ausgangsgrundform) der Titer der resultierenden Faser.

Die Anzahl der miteinander verbundenen Grundformen beträgt bevorzugt 2 bis 10, besonders bevorzugt 2 bis 4.

Durch die erfindungsgemäße Faserkonstruktion werden somit Hohlräume erzeugt, die sich zur Speicherung von Flüssigkeit eignen und stabil sind, d.h. aufgrund der Steifigkeit der Schenkel der Faser nicht kollabieren können.

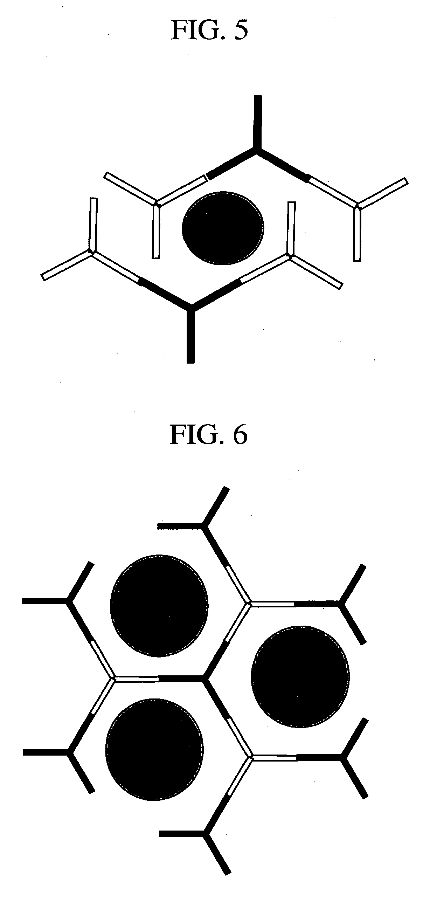

Dies wird schematisch in Figur 5 (hier: Anordnung zweier aus jeweils drei Y-förmigen Grundformen zusammengesetzten Fasern) sowie Figur 6 (hier: Faser aus 10 miteinander verbundenen Y-förmigen Grundformen) dargestellt.

Die miteinander verbundenen Grundformen sind in der erfindungsgemäßen Faser bevorzugt so angeordnet, dass der Querschnitt der Faser zumindest eine Symmetrieachse aufweist, wie z.B. in den Ausführungsformen der Figuren 2, 3 und 4 gezeigt.

Bevorzugt weist in an sich bekannter Weise zumindest ein Teil der Schenkel der Faser, bevorzugt alle Schenkel, ein Verhältnis von Länge zu Breite von 2:1 bis 10:1 auf.

Der Fasertiter der erfindungsgemäßen Faser beträgt bevorzugt von 2 dtex bis 40 dtex, besonders bevorzugt 6 bis 16 dtex. Herkömmliche trilobale Cellulosefaser weisen einen Titer von typischerweise 3 bis 4 dtex auf. Die erfindungsgemäße Faser kann einen demgegenüber deutlich höheren Titer bei gleichzeitig verbesserten bzw. zumindest gleich gut bleibenden Eigenschaften für den Einsatz in saugfähigen Artikeln aufweisen.

Die erfindungsgemäße Cellulosefaser kann in Form einer Stapelfaser, Kurzschnittfaser oder in Form eines Filamentkabels vorliegen.

In einer weiteren bevorzugten Ausführungsform kann die erfindungsgemäße Cellulosefaser eine asymmetrische Faser sein, bei der zumindest einer der Schenkel einer Grundform hinsichtlich seiner Länge von den anderen Schenkeln abweicht und bei der die Länge eines oder mehrerer Schenkel um einen Faktor von 2 bis 10 größer ist als die Länge des oder der kürzesten Schenkel(s).

Es hat sich gezeigt, dass bei Verpressen einer Vielzahl von solchen asymmetrischen Fasern bei gleichem Preßgrad ein Produkt mit geringerer Dichte resultiert, was bei saugfähigen Produkten vorteilhaft ist, da die Saugfähigkeit linear mit steigender Dichte sinkt. Zudem weisen solche asymmetrischen Fasern eine verbesserte Kräuselung auf.

Bevorzugt unterscheiden sich bei der erfindungsgemäßen asymmetrischen Cellulosefaser bei allen ihren Grundformen jeweils alle Schenkel hinsichtlich ihrer Länge voneinander. Solche Fasern werden hier als "vollständig asymmetrische" Cellulosefasern bezeichnet.

Bevorzugt kann bei jeder der asymmetrischen Cellulosefasern zumindest einer der Schenkel auch hinsichtlich seiner Breite von den anderen Schenkeln abweichen. In diesem Fall kann bei jeder dieser asymmetrischen Cellulosefasern die Breite eines oder mehrerer Schenkel um einen Faktor von 1,1 bis 5 größer sein als die Breite des schmalsten Schenkels.

Innerhalb einer Grundform kann der Winkel zwischen den Schenkeln der asymmetrischen Cellulosefaser von 80° bis 140° betragen.

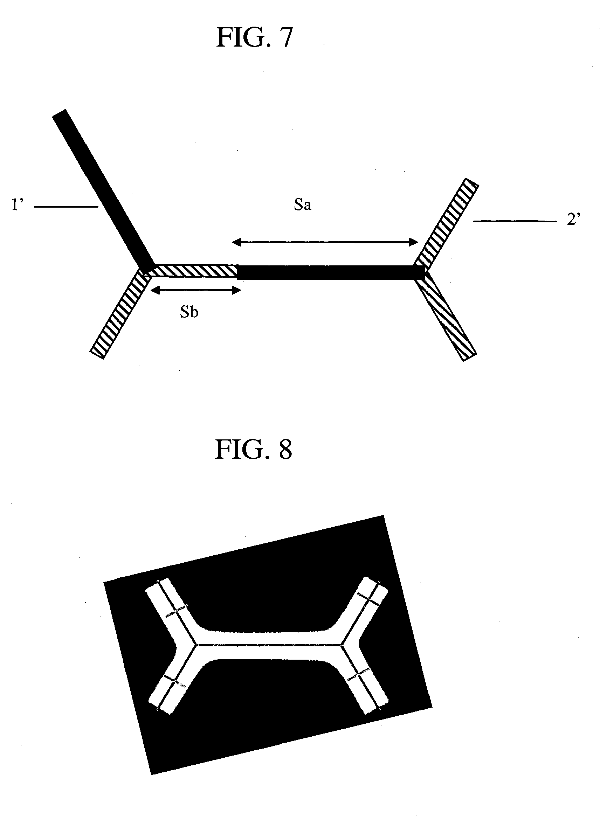

Figur 7 zeigt schematisch ein Beispiel einer erfindungsgemäßen Faser, die aus zwei asymmetrischen Grundformen 1' und 2', die jeweils einen längeren Schenkel (mit einer Schenkellänge Sa) und zwei gleich lange kürzere Schenkel (Schenkellänge Sb) aufweisen, zusammengesetzt ist.

Die vorliegende Erfindung betrifft auch ein Faserbündel, enthaltend eine Vielzahl von erfindungsgemäßen Cellulosefasern in Form von Cellulosestapelfasern.

Als "Faserbündel" ist eine Vielzahl von Fasern zu verstehen, so z.B. Zellwolle (eine Vielzahl von Stapelfasern), ein Strang von Endlosfilamenten oder ein Ballen aus Fasern.

Im erfindungsgemäßen Faserbündel sind bevorzugt die Querschnitte der darin enthaltenen Cellulosefasern im wesentlichen gleich. Es liegt also eine Vielzahl von Cellulosefasern mit im wesentlichen gleichem Querschnittsaufbau (z.B. aus jeweils drei miteinander verbundenen Grundformen) vor.

Wenn das Faserbündel asymmetrische Fasern, wie oben beschrieben, aufweist, so sind bevorzugt zumindest 10%, besonders bevorzugt zumindest 20%, am meisten bevorzugt zumindest 50% der im Faserbündel enthaltenen mehrschenkeligen Fasern asymmetrische Fasern. Bevorzugt sind alle der im Faserbündel enthaltenen Fasern asymmetrische Fasern. Besonders bevorzugt ist der Querschnitt aller im Faserbündel enthaltener asymmetrischen Fasern im wesentlichen gleich.

Das Faserbündel kann weitere Fasern, z.B. nicht mehrschenkelige Cellulosefasern, aber auch Fasern anderer Provenienz, wie z.B. aus anderen Polymeren, enthalten.

Das Verfahren zur Herstellung der erfindungsgemäßen regenerierten Cellulosefaser bzw. des erfindungsgemäßen Faserbündels umfasst die Schritte
- Bereitstellen einer Viskosespinnmasse
- Verspinnen der Viskosespinnmasse durch zumindest eine Öffnung einer Spinndüse in ein Spinnbad unter Bildung von Spinnfäden,
dadurch gekennzeichnet, dass die Öffnung der Spinndüse aus zumindest zwei mehrschenkeligen Unter-Öffnungen gebildet ist, welche Unter-Öffnungen am Ende jeweils zumindest eines ihrer Schenkel mit dem Ende des Schenkels einer anderen Unter-Öffnung verbunden sind oder diesem Schenkelende so nahe kommen, dass sich die austretenden Spinnfäden an den gebildeten Schenkelenden miteinander verbinden.

Es wird somit eine an sich bekannte Spinndüse mit beispielsweise trilobalen Spinnöffnungen so modifiziert, dass jeweils mehrere, bevorzugt 2 bis 4 trilobale Spinnöffnungen so nahe aneinander angeordnet werden, dass beim Verspinnen der Viskose die resultierenden Y-förmigen Fasern an ihren Schenkelenden mit den Schenkelenden der benachbarten Faser verschmelzen und so die aus mehreren Y-förmigen Grundformen aufgebaute erfindungsgemäße Faser bilden.

Um die erfindungsgemäß um einen Faktor von zumindest 1,5 gegenüber der Länge des kürzesten Schenkels größere Länge des Verbindungsschenkels zu erreichen, sind die die Schenkel der Unteröffnungen in entsprechender Weise zu dimensionieren.

Optional kann das erfindungsgemäße Verfahren den Schritt des Mischens der mittels des Verfahrens hergestellten Fasern mit anderen Fasern, z.B. herkömmlichen mehrschenkeligen Fasern, nicht mehrschenkeligen Fasern und/oder Fasern anderer Provenienz, wie z.B. aus anderen Polymeren, umfassen.

Das erfindungsgemäße Verfahren ist bevorzugt dahingehend ausgestaltet, dass die Spinndüse mehrere Öffnungen aufweist, wobei sämtliche Öffnungen eine im wesentlichen gleiche Anordnung von Unter-Öffnungen aufweisen. Dadurch wird z.B. in einem Faserbündel, welche aus erfindungsgemäßen Fasern besteht, die bevorzugte Ausgestaltung, dass alle Fasern im wesentlichen den gleichen Querschnitt aufweisen, erreicht.

Zur Herstellung von asymmetrischen Grundformen, wie oben beschrieben, wird die Viskosespinnmasse durch Öffnungen gesponnen, bei welchen zumindest einer der Schenkel hinsichtlich seiner Länge von den anderen Schenkeln abweicht, wobei die Länge eines oder mehrerer Schenkel der Öffnungen um einen Faktor von 2 bis 10 größer ist als die Länge des oder der kürzesten Schenkel(s).

Die Erfindung betrifft weiters die Verwendung einer erfindungsgemäßen regenerierten Cellulosefaser bzw. des erfindungsgemäßen Faserbündels in absorbierenden Produkten, Hygieneartikeln, insbesondere Tampons, Inkontinenzprodukten, Hygienebinden und Pantylinern, Füllmaterialien für Bettdecken, Kissen und Schlafsäcke, Verpackungen für Lebensmitteln, insbesondere für Fleischprodukte, Papieren, insbesondere Filterpapieren, Flock, Bekleidung, insbesondere Inlay-Vliesen, und Wundauflagen.

Zum Einsatz in Papieren eignet sich die erfindungsgemäße Faser insbesondere in Form von Kurzschnittfasern.

Im Bereich Bekleidung eignet sich die erfindungsgemäße Faser insbesondere in Bekleidungstextilien für das Feuchtemanagement, ggf. in Mischung mit anderen Fasern oder als mehrschichtige Konstruktion.

### Beispiele:

### Beispiel 1

Unter vergleichbaren Bedingungen wird eine Y-Faser im Titer 3,3dtex und 6,4dtex ausgesponnen. Die Symmetrie der Faser wurde dabei nicht verändert, die Querschnittsfläche wird lediglich proportional vergrößert.

Aus den Fasern wird anschließend ein Saugkörper hergestellt und an diesem das Expansionsvermögen sowie die Absorptionskapazität (Synginatest gemäß EDANA / INDA Standard Test Methods for the Nonwovens and Related Industries ERT 350.0 bzw. WSP 350.1) untersucht.

Die Ergebnisse sind in der folgende Tabelle zusammengefasst:

| | Max. Expansion | Expansionsgeschwindigkeit | WHV | WRHV | Stability* | Syngina | Syngina korrigiert |
|---|---|---|---|---|---|---|---|
| Fasertype | [ml] | [ml/5,55g] | [g/g] | [%] | [mm] | [g/g] | [g/g] |
| Y-Faser 3,3dtex | 9,86 | 5,39 | 25,00 | 89,70 | 11,47 | 4,69 | 4,75 |
| Y-Faser 6,4dtex | 10,14 | 7,06 | 19,10 | 78 | 17,22 | 4,81 | 4,29 |

Die Untersuchung zeigt, dass Saugkörper aus Fasern mit höherem Titer etwas weiter und deutlich schneller expandieren, was auf die erwünschte Versteifung der Fasern zurückzuführen ist. Diese Versteifung macht sich auch bei der Trockenexpansion (Stability) des Saugkörpers bemerkbar, welche um etwa 50% steigt. Dieser Effekt ist in der Regel unerwünscht, da er die Herstellung eines verpressten Saugkörpers in den gewünschten Dimensionen erschwert.

Allerdings ist bei der Messung des Wasserhaltevermögens als auch des Wasserrückhaltevermögens (also ohne und unter sehr hohem Druck) ein deutlicher Abfall des Absorptionsvermögens der höhertitrigen Faser erkennbar, was auf die durch den höheren Titer verursachte gröbere Porenstruktur zurückzuführen ist.

In der Syngina-Messung erzielt die höhertitrige Faser zwar zunächst ein besseres Resultat. Diese Messung ist jedoch von der Dichte des Prüfkörpers abhängig. Korrigiert man das Ergebnis um einen experimentell ermittelten Faktor (von 0,1g/g pro 2mm Stabilität ausgehend von einem Basiswert von 12mm) so zeigt sich (siehe Spalte "Syngina korrigiert"), dass die höhertitrige Faser eine geringere dichtespezifische Absorptionskapazität hat.

### Beispiel 2

Unter vergleichbaren Bedingungen wird eine erfindungsgemäße Faser, die aus zwei Y-förmigen Grundformen ("Doppel-Y") zusammengesetzt ist (siehe Figur 2), mit einem Titer von 6,5 dtex bzw. 10,7 dtex ausgesponnen. Als Vergleichsmuster dienen die Fasern aus Beispiel 1, die ebenfalls unter vergleichbaren Bedingungen ausgesponnen wurden. Die Geometrien der Y-Grundformen der Fasern aus Beispiel 2 entsprachen in etwa den korrespondierenden Y-Querschnitten aus Beispiel 1.

Die "Doppel-Y" Faser mit 6,5dtex kann man sich somit aus zwei der Y-Fasern mit 3,3dtex aus Beispiel 1 zusammengesetzt vorstellen.

Die "Doppel-Y" Faser mit 10,7dtex kann man sich aus zwei der Y-Fasern mit 6,4dtex aus Beispiel 1 zusammengesetzt vorstellen.

An den Fasermustern werden die gleichen Prüfungen durchgeführt wie an denen aus Beispiel 1. Die Ergebnisse sind in der folgenden Tabelle zusammengefasst:

| | Max. Expansion | Expansionsgeschwindigkeit | WHV | WRHV | Stability* | Syngina | Syngina korrigiert |
|---|---|---|---|---|---|---|---|
| Fasertype | [ml] | [ml/5,55g] | [g/g] | [%] | [mm] | [g/g] | [g/g] |
| Y-Faser 3,3dtex | 9,86 | 5,39 | 25,00 | 89,70 | 11,47 | 4,69 | 4,75 |
| Y-Faser 6,4dtex | 10,14 | 7,06 | 19,10 | 78 | 17,22 | 4,81 | 4,29 |
| Doppel-Y 6,5dtex | 10,97 | 5,66 | 23,80 | 91,20 | 11,02 | 4,78 | 4,87 |
| Doppel-Y 10,7dtex | 10,86 | 6,93 | 24,60 | 82 | 15,53 | 5,17 | 4,82 |

Ergebnis: Die "Doppel-Y"-Faser mit einem Titer von 6,5 dtex hat im Vergleich zur einfachen Y-Faser mit 3,3 dtex ein erhöhtes Absorptions- und Expansionsvermögen. Die Werte für Wasserhaltevermögen und Wasserrückhaltevermögen sind kaum verändert. Allerdings ist keine so starke Erhöhung der Expansionsgeschwindigkeit möglich wie bei der einfachenY-Faser mit 6,4 dtex Titer.

Beim höheren Fasertiter der "Doppel-Y"-Faser (10,7 dtex) lassen sich beide Vorteile verbinden. Die "Doppel-Y-"Faser mit 10,7 dtex zeigt die gleiche vorteilhafte Expansionsgeschwindigkeit wie die einfache Y-Faser mit 6,4 dtex (gleiche Dicke der Y-Grundformen wie bei der einfachen Y-Faser mit 6,4 dtex).

Gleichzeitig bleibt die Absorptionskapazität ohne Druck (WHV) bzw. unter physiologischem Druck (Syngina-Messung) auf mindestens dem gleichen hohen Niveau wie jenem der ursprünglichen einfachen Y-Faser mit 3,3 dtex (die zusätzliche Absorption durch vorgefertigte Hohlräume kompensiert die gröbere Porenstruktur).

### Beispiel 3

Viskose wurde durch eine Spinndüse mit Öfffnungen, die in Figur 8 schematisch dargestellt sind, versponnen. Die Spinnöffnung kann man sich gedanklich als aus zwei dreischenkeligen (trilobalen) Grundformen zusammengesetzt vorstellen.

Im Beispiel 3a) betrug die Breite der Schenkel der Öffnungen jeweils 20 µm und die Länge der freien (nicht miteinander verbundenen) Schenkel 60 µm, jeweils ausgehend vom gedanklichen Zentrum der beiden Grundformen ermittelt (siehe die dünnen Striche in der Figur 8). Durch die Verbindung der beiden Grundformen entsteht ein Verbindungsschenkel mit einer Länge von 120 µm (wiederum ermittelt als Abstand der Zentren der beiden Grundformen voneinander).

Im Beispiel 3b) betrug die Breite der Schenkel der Öffnungen jeweils 25 µm, die Länge der freien Schenkel je 75 µm und die Länge des Verbindungsschenkels ca. 140 µm.

Jede Spinndüse wies jeweils ca. 400 solcher Öffnungen auf.

Diese Spinndüsen werden im Folgenden auch als "YY"-Düsen bzw. die daraus ersponnenen Fasern als "YY"-Fasern bezeichnet.

Viskose wurde durch diese Düsen wie folgt versponnen und weiterbehandelt:

| | |
|---|---|
| Abzug: | 50m/min |
| Hauptverstreckung: | 25% |
| Titereinstellung: | über Durchsatz |
| Viskose: | Cellulosegehalt: 9,6% |
| | NaOH-Gehalt: 5,6% |
| | Viskosität in Kugelfallsekunden: 38s |
| | Die Viskose enthielt Polyethylenglycol (PEG). |
| Nachbehandlung: | Schnitt auf 40mm, Aufschwemmen, Waschen, Nachbehandlung, Trocknung im Trockenschrank. |

Jeweils drei einzelne YY-Düsen wurden auf einen Düsenhalter montiert und ausgesponnen. In jeder Versuchserie wurde auch eine Faser mit normalem trilobalem Querschnitt gemäß EP 0 301 874 A in ansonsten gleicher Weise ausgesponnen. Diese Fasern werden in der Folge als "Referenzfasern" bezeichnet.

Unter Verwendung der Düsenöffnungen gemäß Beispiel 3a) wurden durch entsprechende Veränderung des Viskosedurchsatzes YY-Fasern mit einem Titer von 3,29 dtex, 4,11 dtex und 4,93 dtex ersponnen.

Unter Verwendung der Düsenöffnungen gemäß Beispiel 3b) wurden durch entsprechende Veränderung des Viskosedurchsatzes YY-Fasern mit einem Titer von 4,77 dtex, 5,96 dtex und 7,15 dtex ersponnen.

Die Referenzfasern hatten jeweils einen Titer von 3,3 dtex.

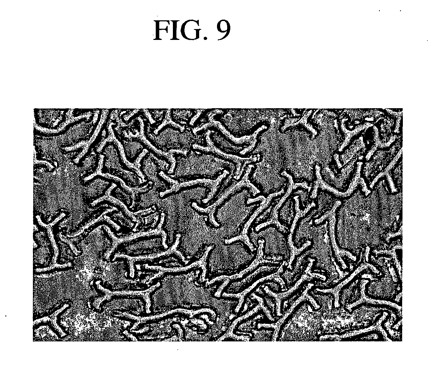

Figur 9 zeigt eine Mikrofotografie der YY-Fasern gemäß Beispiel 3b) mit einem Titer von 5,96 dtex.

Die Querschnittsaufnahmen der Fasern zeigen, daß die Länge des Verbindungsschenkels der hergestellten Fasern in vielen Fällen mehr als doppelt so groß wie die Länge der freien Schenkel ist. Um ein Verhältnis der Länge des Verbindungsschenkel zur Länge der freien Flügel von maximal 2,0 sicherzustellen, müßte der Mittelsteg in der Spinndüsenöffnung um weitere ca. 5% verkürzt werden.

Die Eigenschaften der hergestellten erfindungsgemäßen Fasern wurden mit jenen der Referenzfasern mit einem Titer von 3.3 dtex verglichen. Die erfindungsgemäßen Fasern zeigten insbesondere hinsichtlich ihrer Syngina-Saugfähigkeit deutlich verbesserte Eigenschaften (bis zu ca. 15% höhere Saugfähigkeit).

In einer weiteren Versuchsserie wurden auf analoge Weise YY-Fasern mit einem Titer von 3,7 dtex, 4,11 dtex und 4,52 dtex (Düsendesign a)) bzw. 5,36 dtex, 5,96 dtex und 6,56 dtex (Düsendesign b)) hergestellt. Es wurden auch bei diesen Fasern verbesserte Syngina-Saugfähigkeiten gegenüber den Referenzfasern festgestellt.

## Patentansprüche

1. Durch das Viskoseverfahren erhaltene regenerierte Cellulosefaser mit einem mehrschenkeligen Querschnitt, **dadurch gekennzeichnet, dass** der Querschnitt aus zumindest zwei mehrschenkeligen Grundformen (1', 2', 3', 4') gebildet ist, welche Grundformen an jeweils zumindest einem ihrer Schenkelenden mit dem Schenkelende einer anderen Grundform verbunden sind und die Länge des durch die Verbindung der beiden Schenkelenden resultierenden Verbindungsschenkels (12) um einen Faktor von zumindest 1,5, bevorzugt 1,5 bis 2,0 länger ist als die Länge des kürzesten der anderen Schenkel.

2. Cellulosefaser gemäß Anspruch 1, **dadurch gekennzeichnet, dass** die Grundformen aus der Gruppe bestehend aus Y-förmigen Grundformen, X-förmigen Grundformen und Mischungen daraus ausgewählt sind.

3. Cellulosefaser gemäß Anspruch 1 oder 2, dass die Anzahl der miteinander verbundenen Grundformen 2 bis 10, bevorzugt 2 bis 4 beträgt.

4. Cellulosefaser gemäß einem der vorhergehenden Ansprüche, **dadurch gekennzeichnet, dass** der Querschnitt zumindest eine Symmetrieachse aufweist.

5. Cellulosefaser gemäß einem der vorhergehenden Ansprüche, **dadurch gekennzeichnet, dass** zumindest ein Teil der Schenkel, bevorzugt alle Schenkel, ein Verhältnis von Länge zu Breite von 2:1 bis 10:1 aufweisen.

6. Cellulosefaser gemäß einem der vorhergehenden Ansprüche, **dadurch gekennzeichnet, dass** der Fasertiter von 2 dtex bis 40 dtex, bevorzugt 6 bis 16 dtex, beträgt.

7. Cellulosefaser gemäß einem der vorhergehenden Ansprüche, **dadurch gekennzeichnet, dass** sie in Form einer Stapelfaser, Kurzschnittfaser oder in Form eines Filamentkabels vorliegt.

8. Cellulosefaser gemäß einem der vorhergehenden Ansprüche, **dadurch gekennzeichnet, dass** in den mehrschenkeligen Grundformen zumindest einer der Schenkel hinsichtlich seiner Länge von den anderen Schenkeln abweicht und die Länge eines oder mehrerer Schenkel um einen Faktor von 2 bis 10 größer ist als die Länge des oder der kürzesten Schenkel(s).

9. Faserbündel, enthaltend eine Vielzahl von Cellulosefasern gemäß einem der vorhergehenden Ansprüche.

10. Faserbündel gemäß Anspruch 9, **dadurch gekennzeichnet, dass** die Querschnitte der Cellulosefasern im wesentlichen gleich sind.

11. Verfahren zur Herstellung einer regenerierten Cellulosefaser bzw. des Faserbündels gemäß einem der vorhergehenden Ansprüche, umfassend die Schritte
- Bereitstellen einer Viskosespinnmasse
- Verspinnen der Viskosespinnmasse durch zumindest eine Öffnung einer Spinndüse in ein Spinnbad unter Bildung von Spinnfäden,
**dadurch gekennzeichnet, dass** die Öffnung der Spinndüse aus zumindest zwei mehrschenkeligen Unter-Öffnungen gebildet ist, welche Unter-Öffnungen am Ende jeweils zumindest eines ihrer Schenkel mit dem Ende des Schenkels einer anderen Unter-Öffnung verbunden sind oder diesem Schenkelende so nahe kommen, dass sich die austretenden Spinnfäden an den gebildeten Schenkelenden miteinander verbinden.

12. Verfahren gemäß Anspruch 11, **dadurch gekennzeichnet, dass** die Spinndüse mehrere Öffnungen aufweist, wobei sämtliche Öffnungen eine im wesentlichen gleiche Anordnung von Unter-Öffnungen aufweisen.

13. Verwendung einer regenerierten Cellulosefaser bzw. des Faserbündels gemäß einem der Ansprüche 1 bis 10 in absorbierenden Produkten, Hygieneartikeln, insbesondere Tampons, Inkontinenzprodukten, Hygienebinden und Pantylinern, Füllmaterialien für Bettdecken, Kissen und Schlafsäcke, Verpackungen für Lebensmitteln, insbesondere für Fleischprodukte, Papieren, insbesondere Filterpapieren, Flock, Bekleidung, insbesondere Inlay-Vliesen, und Wundauflagen.

## Claims

1. A regenerated cellulose fibre obtained by the viscose process and having a multi-limbed cross-section, **characterized in that** the cross-section is formed of at least two multi-limbed basic shapes (1', 2', 3', 4'), which basic shapes are connected, in each case at least at one of their limb ends, to the limb end of another basic shape and the length of the connecting limb (12) resulting from the connection of the two limb ends is longer than the length of the shortest one of the other limbs by a factor of at least 1.5, preferably of from 1.5 to 2.0.

2. A cellulose fibre according to claim 1, **characterized in that** the basic shapes are selected from the group consisting of Y-shaped basic shapes, X-shaped basic shapes and mixtures thereof.

3. A cellulose fibre according to claim 1 or 2, **characterized in that** the number of basic shapes connected to each other ranges from 2 to 10, preferably from 2 to 4.

4. A cellulose fibre according to any of the preceding claims, **characterized in that** the cross-section exhibits at least one axis of symmetry.

5. A cellulose fibre according to any of the preceding claims, **characterized in that** at least a portion of the limbs, preferably all the limbs, have a ratio of length to width of from 2:1 to 10:1.

6. A cellulose fibre according to any of the preceding claims, **characterized in that** the fibre titre ranges from 2 dtex to 40 dtex, preferably from 6 to 16 dtex.

7. A cellulose fibre according to any of the preceding claims, **characterized in that** it is provided in the form of a staple fibre, a short-cut fibre or in the form of a filament tow.

8. A cellulose fibre according to any of the preceding claims, **characterized in that**, in the multi-limbed basic shapes, at least one of the limbs deviates in its length from the other limbs and the length of one or several limbs is greater than the length of the shortest limb(s) by a factor of 2 to 10.

9. A fibre bundle containing a plurality of cellulose fibres according to any of the preceding claims.

10. A fibre bundle according to claim 9, **characterized in that** the cross-sections of the cellulose fibres are essentially equal.

11. A process for the production of a regenerated cellulose fibre and, respectively, of the fibre bundle according to any of the preceding claims, comprising the steps of
- providing a viscose spinning mass
- spinning the viscose spinning mass through at least one opening of a spinneret into a spinning bath, whereby filaments are formed,
**characterized in that** the opening of the spinneret is formed of at least two multi-limbed sub-openings, which sub-openings are connected, in each case at the end of at least one of their limbs, to the end of the limb of another sub-opening or come so close to said limb end that the emerging filaments will interconnect at the limb ends which have been formed.

12. A process according to claim 11, **characterized in that** the spinneret comprises several openings, with all the openings having essentially the same arrangement of sub-openings.

13. The use of a regenerated cellulose fibre and, respectively, of the fibre bundle according to any of claims 1 to 10 in absorbent products, sanitary products, in particular tampons, incontinence products, sanitary pads and panty liners, filling materials for blankets, cushions and sleeping bags, packings for foodstuff, in particular for meat products, papers, in particular filter papers, flock, clothing, in particular inlay fleece, and wound dressings.

## Revendications

1. Fibre cellulosique régénérée par le procédé « viscose », ayant une section transversale en plusieurs branches, **caractérisée en ce que** la section transversale est formée par au moins deux formes de base en plusieurs branches (1', 2', 3', 4'), lesquelles formes de base sont reliées, chaque fois, avec au moins l'une de leurs extrémités de branches avec l'extrémité de branche d'une autre forme de base, et que la longueur de la branche de liaison (12) résultant de la liaison des deux extrémités de branches est plus longue d'un facteur d'au moins 1,5, de préférence de 1,5 à 2,0, que la longueur de la plus courte parmi les autres branches.

2. Fibre cellulosique selon la revendication 1, **caractérisée en ce que** les formes de base sont choisies dans le groupe constitué par les formes de base en forme d'Y, les formes de base en forme d'X et des mélanges de celles-ci.

3. Fibre cellulosique selon les revendications 1 ou 2, que le nombre de formes de base reliées entre elles se situe entre 2 et 10, de préférence entre 2 et 4.

4. Fibre cellulosique selon l'une des revendications précédentes, **caractérisée en ce que** la section transversale présente au moins un axe de symétrie.

5. Fibre cellulosique selon l'une des revendications précédentes, **caractérisée en ce qu'**au moins une partie des branches, de préférence toutes les branches, présentent un rapport de la longueur sur la largeur de 2 : 1 à 10 : 1.

6. Fibre cellulosique selon l'une des revendications précédentes, **caractérisée en ce que** le titre des fibres s'élève de 2 dtex à 40 dtex, de préférence de 6 à 16 dtex.

7. Fibre cellulosique selon l'une des revendications précédentes, **caractérisée en ce qu'**elle se présente sous la forme d'une fibre discontinue, d'une fibre coupée court ou sous la forme d'un câble de filaments.

8. Fibre cellulosique selon l'une des revendications précédentes, **caractérisée en ce que**, parmi les formes de base à plusieurs branches, au moins l'une des branches dévie des autres branches en ce qui concerne la longueur et que le longueur d'une branche, ou de plusieurs branches, est plus grande d'un facteur de 2 à 10 que la longueur de la branche la plus courte ou des branches les plus courtes.

9. Faisceau de fibres, contenant une multitude de fibres cellulosiques selon l'une des revendications précédentes.

10. Faisceau de fibres selon la revendication 9, **caractérisé en ce que** les sections transversales des fibres cellulosiques sont dans l'ensemble identiques.

11. Procédé de fabrication d'une fibre cellulosique régénérée, respectivement, du faisceau de fibres, selon l'une des revendications précédentes, comprenant les étapes
- de mise au point d'une masse de viscose à filer
- de filage de la masse de viscose à filer par au moins une ouverture d'une buse de filage dans un bain de filage moyennant la formation de fils de filage,
**caractérisé en ce que** l'ouverture de la buse de filage est formée par au moins deux subdivisions d'ouverture en forme de plusieurs branches, lesquelles subdivisions d'ouverture sont reliées à leur extrémité, chacune, par au moins l'une de leurs branches avec l'extrémité de la branche d'une autre subdivision d'ouverture, ou que ces extrémités de branches arrivent à être si proches que les fils de filage sortants se relient entre eux aux extrémités des branches formées.

12. Procédé selon la revendication 11, **caractérisé en ce que** la buse de filage présente plusieurs ouvertures, où toutes les ouvertures présentent un agencement des subdivisions d'ouvertures dans l'ensemble identique.

13. Utilisation d'une fibre cellulosique régénérée, respectivement, d'un faisceau de fibres, selon l'une des revendications 1 à 10, dans des produits absorbants, des articles d'hygiène, notamment des tampons, des produits pour l'incontinence, des serviettes hygiéniques ou des protège-slips, des matériaux de remplissage pour des couvre-lits, des coussins et des sacs de couchage, des emballages pour des produits alimentaires, notamment des produits à base de viande, des papiers, notamment des filtres en papier, du flocage, des vêtements, notamment des tissus polaires internes, et des pansements.
